# EUROPEAN PATENT APPLICATION

(11) **EP 3 702 438 A1**
(43) Date of publication of application: **02.09.2020**
(21) Application number: 20158410.9
(22) Date of filing: 01.08.2013
(51) Int. Cl.: C12G 1/00, C05F 11/08, A01G 7/06

(54) **METHODS FOR THE IMPROVEMENT OF ORGANOLEPTIC PROPERTIES OF MUST, NON-FERMENTED AND FERMENTED BEVERAGES**

(30) Priority: 10.08.2012 US 201261681964 P
(62) Divisional of application: 13805502.5
(71) Applicant: Danstar Ferment AG, 6301 Zug (CH)
(72) Inventor: SUAREZ MARTINEZ, Carlos, E-28007 Madrid (ES); HERAS MANSO, Jose, Maria, E-28050 Madrid (ES); SANCHEZ, Bruno, F-31180 Castelmaurou (FR); SANCHEZ, Jean-Marc, F-31180 Castelmaurou (FR)
(74) Representative: Neilson, Martin Mark

(57) **Abstract**

There is provided a process for the improvement of the organoleptic properties of must, non-fermented and fermented beverages. The vines are treated before harvesting grapes with a yeast composition to balance sugar and phenolic maturity in the grapes. The grapes are harvested and processed to produce must, non-fermented and fermented beverages having improved organoleptic properties. There is also provided must, non-fermented and fermented beverages having improved organoleptic properties obtained by the process described above.

## Description

### CROSS REFERENCE TO RELATED APPLICATIONS

The present application claims the priority of U.S. Provisional Application Serial No. 61/681,964, filed August 10, 2012 entitled "Methods and Materials for the Improvement of Organoleptic Properties of Red Wine and Fruit Juice," which is hereby incorporated by reference in its entirety.

### FIELD OF THE INVENTION

The present invention is in the fields of agriculture, viticulture and beverage manufacturing. More particularly, the invention relates to methods for producing must, non-fermented and fermented beverages with improved organoleptic properties.

### BACKGROUND OF THE INVENTION

High quality red wines have a deep red color, a full body and soft tannins. These factors are related to the phenolic maturity (or ripeness) of compounds such as flavonoids. These include anthocyanins and tannins (or procyanidins) and are mostly present in the skin and seeds of red grapes (Zamora (2003), Elaboracion y crianza del vino tinto : aspectos cientificos y practicos. AMV Ediciones/Mundi-Prensa, Madrid).

Tannins are essentially bitter and polymerize with anthocyanins to form acceptable-tasting flavourants. A higher degree of polymerization is correlated with a higher phenolic maturity. To avoid bitter and astringent wines, winemakers must therefore harvest grapes with a high phenolic maturity.

Due to changing climate conditions and increasing temperatures, the pulp of grapes tends to ripen faster than in the past. To achieve a proper phenolic maturity, it is therefore necessary to exceed the timing of optimal sugar maturity, especially in hot climate regions. Because of the increase in the sugar content of harvested grapes, red wines with a higher alcohol content tend to be produced (Zamora (2003), Elaboracion y crianza del vino tinto: aspectos cientificos y practicos. AMV Ediciones/Mundi-Prensa, Madrid). Experts agree this trend will intensify in the future (Pincus (2003), Wine, place and identity in climate change. Gastronomica 3, 87-93.).

Wines with high alcohol content exhibit a number drawbacks including a higher level of taxes in certain countries, aggressive sensations in the mouth and a negative effect on the aromatic quality. During wine production, excessive alcohol levels may also complicate the fermentation process (Zamora (2004). Las paradas de fermentacion. Enologos 29, 28-32).

Accordingly, there exists a need for the development of new techniques that improve the balance between sugar and phenolic maturity of grapes and allow for the production of quality fruit juices or quality wines without excessive alcohol levels.

Application of fertilizer by foliar spraying is widespread in the management of the vineyard. Commercial products promote the accumulation of sugars in berries leading to more alcoholic wines. These products are interesting for grape growers who sell grapes according to their weight and sugar content, but are inconsistent with the production of quality wines with a balanced sugar and phenolic maturity.

In U.S. Pat. No. 5,068,998 to Vanysacker (1991), standing grapes were treated with an aqueous suspension containing potassium hydroxide, ethanol and a saponified olive oil that rendered the cuticle of grapes hydrophilic. Red wines produced from the treated grapes exhibited better organoleptic properties than controls as demonstrated by a higher content of alcohol and phenolic compounds. However, the production of alcoholic wines has rather become a concern with changing environmental conditions. Also, the total content of phenolic compounds as measured in this document did not account for the degree of polymerization of flavonoids and therefore for the phenolic maturity.

In U.S. Pat. No. 6,328,780 to Bull et al. (2001), the object of the invention was a foliar fertilizer of trace elements that improved the yield and/or quality of crops. In the case of grape vines, the formulation improved the uniformity of berry sizes and ripening. It promoted an intensification of the bouquet and flavor of the juice in six varieties of grapes (including two red varieties). The formulation also led to an improved wine quality, intensified and more complex bouquet and lengthened palate, although the approach used for evaluation was not disclosed. The alcohol content and phenolic maturity of the grapes were not considered in the analysis.

Various methods have been developed to reduce the alcohol content of fermented beverages such as reverse osmosis, membrane techniques or supercritical fluid extraction: Bui et al., 1986; Pickering, 2000; Diban et al., 2008. In U.S. Pat. No. 6,203,826 to Calvin (2001), the separation of a must in a high and low-sugar fraction was used for the production of low-alcohol wine. In another document, U.S. Pat. No. 4,978,547 to Petershans (1998), a technique combining evaporation, separation and distillation was developed for the same purpose. These methods are performed post-harvest or post-fermentation, which raises concerns regarding potential adverse effects on the organoleptic properties of the wine.

Although methods were developed to extract alcohol without altering components of organoleptic capacity as in Int. Pat. No. PT102694 (A) to Salvador (2003), these physical methods may be extremely costly for winemakers. Other alternatives have been considered such as the selection of yeasts with a lower yield of transformation of sugar in ethanol, the choice of grape varieties with a better phenolic ripeness or the design of fermentation and aging techniques to soften the harshness of tannins (Zamora (2006). El Cambio Climatico : una amenza para nuestra vitivinicultura, 39). In spite of all the available art, there remains a need for the development of methods that can be efficiently implemented by winemakers.

Yeasts and derivatives have been used as fertilizers and applied by foliar spraying. In U.S. Pat. App. US2009/0173122 A1 to Stemwedel, an organic fertilizer was produced from yeast cellular plasma. Yeast lysates were used in Pat. No. NZ572108 to Donaghys Industries Limited (2008) as part of a bio-stimulant composition for the improvement of plant growth response and plant development. In Pat. No. FR2904184 to Sanchez, a foliar fertilizer containing inactivated yeasts or yeast derivatives (extracts or membranes) was used to enrich plants in Selenium. Generally, such foliar spraying of yeast has been used as a substitute for foliar spraying of fertilizer and has been generally successful in improving the growth and yield of vegetables.

Accordingly, there remains a need for a method for improving the balance between sugar and phenolic maturity of grapes and for improving the organoleptic properties of must, fermented and non-fermented beverages produced therefrom.

### SUMMARY OF THE INVENTION

In an aspect there is provided a process for improving organoleptic properties of must, non-fermented or fermented beverages. The method comprises: treating vines before harvesting grapes with a yeast composition to balance sugar and phenolic maturation in the grapes; harvesting the grapes; and processing the grapes to produce must, non-fermented or fermented beverage.

In an aspect of the process, the step of harvesting the grapes comprises harvesting the grapes ahead of the harvest time of grapes for the production of fermented beverages with lower alcohol content than fermented beverages produced with grapes harvested at the harvest time.

In an aspect of the process, the yeast composition may comprise active yeast, inactivated yeast, yeast extract, yeast autolysate, yeast cell wall, yeast derivative or combinations thereof.

In an aspect of the process, the yeast composition may comprise at least one yeast from the genus *Saccharomyces* and/or non-*Saccharomyces.* The non-*Saccharomyces* yeast is selected from the group consisting of *Candida* sp, *Hanseniaspora* sp, *Hansenula* sp, *Kluyveromyces* sp, *Metschnikowia* sp, *Pichia* sp, *Starmerella* sp and *Torulaspora* sp.

In an aspect of the process, the yeast composition may comprise at least one yeast enriched in vitamins, minerals or nutrients.

In an aspect of the process, the yeast composition may be in liquid or solid form.

In an aspect of the process, the yeast composition may have a yeast content of at least 0.05% (weight yeast / total weight yeast composition), preferably between 0.15 and 0.5% (w/w).

In an aspect of the process, the yeast composition may further comprise nutrients, fertilizers, pesticides, suitable excipients, adjuvants or combinations thereof.

In an aspect of the process, the yeast composition may be applied through foliar spray.

In another aspect of the process, the yeast composition may be applied by pulverization, mechanical incorporation or any other suitable method.

In an aspect of the process, the step of treating the vines comprises at least one treatment, preferably two treatments; the second treatment is performed between 10 and 16 days after the first treatment, preferably between 12 and 14 days.

In an aspect there is provided must, fermented or non-fermented beverage with improved organoleptic properties obtained according to the process described above.

### DESCRIPTION OF THE DRAWINGS

Figure 1 illustrates the evolution of the alcohol potential of grapes from Example 1 before harvest;
Figure 2 illustrates the evolution of the Index of Maturity of Tannins (IMT) of grapes from Example 1 before harvest;
Figure 3 illustrates the evolution of the Dmach Index of grapes from Example 1 before harvest;
Figure 4 illustrates the kinetics of malolactic fermentation of wines from Example 1;
Figure 5a illustrates the sensorial descriptors of the aromatic phase of Tempranillo variety from Example 1 tasted 15 months after the vintage;
Figure 5b illustrates the sensorial descriptors of the gustatory phase of Tempranillo variety from Example 1 tasted 15 months after the vintage;
Figure 6 illustrates the sensorial descriptors of the aftertaste phase of Tempranillo variety from Example 1 tasted 15 months after the vintage;
Figures 7a, 7b and 7c illustrate the sensorial descriptors of gustatory phase for Valpolicella wines made with grapes harvested a) 24 days after the second treatment, b) 31 days after the second treatment and c) 38 days after the second treatment;
Figures 8a, 8b and 8c illustrate the sensorial descriptors of aromatic phase for Valpolicella wines made with grapes harvested a) 24 days after the second treatment, b) 31 days after the second treatment and c) 38 days after the second treatment;
Figures 9a, 9b and 9c illustrate the sensorial descriptors of aftertaste phase for Valpolicella wines made with grapes harvested a) 24 days after the second treatment, b) 31 days after the second treatment and c) 38 days after the second treatment;
Figure 10 illustrates the sensorial descriptors of gustatory phase for the Merlot variety (Languedoc-Roussillon, France);
Figure 11 illustrates the sensorial descriptors of gustatory phase for the Syrah variety (Languedoc-Roussillon, France);
Figure 12 illustrates the sensorial descriptors of gustatory phase for the Cabernet Sauvignon variety (Retuerta del Bullaque, Ciudad Real, Spain); and
Figure 13 illustrates the sensorial descriptors of aftertaste phase for the Cabernet Sauvignon variety (Retuerta del Bullaque, Ciudad Real, Spain).

### DETAILED DESCRIPTION

High quality red wines are produced from grapes with a balanced pulp and phenolic maturity. The pulp (or sugar) maturity correlates with the sugar content and ultimately with the alcohol content of wines. Phenolic compounds such as tannins are bitter and present in the skin and seeds of grapes. The phenolic maturity represents the degree of polymerization of tannins and anthocyanins to form acceptable-tasting flavourants.

With increasing temperatures in the vineyard, the pulp reaches its optimal maturity before the skin and seeds. To produce wines with good aromatic quality and a high phenolic maturity, it is therefore necessary to exceed to optimal timing of pulp maturity, resulting in more alcoholic wines.

High alcohol content in wines may have a negative effect on the aromatic quality with aggressive sensations in the mouth. These wines may also be subject to higher taxation in certain countries.

What is needed therefore is a method for improving the balance between the pulp and phenolic maturity of grapes in the vineyard. Fermented beverages produced from the grapes will exhibit improved organoleptic properties without excessive alcohol levels, consistent with high quality wines.

The present invention is inspired by the unexpected finding that standing grapes treated at the onset of veraison by foliar spraying of a yeast composition exhibited a higher degree of phenolic ripeness up to one week prior to the anticipated harvest time. This indicated an improved balance between the phenolic and pulp maturity up to one week prior to the anticipated harvest time. Fermented beverages such as red wine produced from the grapes exhibited a lower alcohol content and/or higher phenolic maturity. Tasting performed after alcoholic and malolactic fermentation but also after aging in bottles demonstrated the improved organoleptic properties of red wine produced therefrom.

The present invention relates to a process for improving organoleptic properties of must, non-fermented and fermented beverages such as red wine. The process comprises treating vines prior to harvest with a yeast composition whereby the balance between sugar and phenolic maturation of the grapes is improved, harvesting the grapes and producing must, fermented and/or non-fermented beverage such as red wine from the grapes whereby the organoleptic properties of the must or beverage are improved.

The present invention also relates to a process for improving organoleptic properties of must, non-fermented or fermented beverages. The process comprises treating vines before harvesting grapes with a yeast composition to balance sugar and phenolic maturation in the grapes; harvesting the grapes; and processing the grapes to produce must, non-fermented or fermented beverages.

The improved organoleptic properties refer to chemical, olfactory and/or gustative markers. The improved chemical markers may be characterized by a lower Dmach index (the polymerization degree of tannins) or higher index of maturation of tannins (IMT) than untreated controls. The gustative and olfactory markers consist of, but are not limited to, mouthfeel, tanic intensity, astringency, volume, length and complexity. The meaning of the gustative and olfactory markers are well known to the in the art.

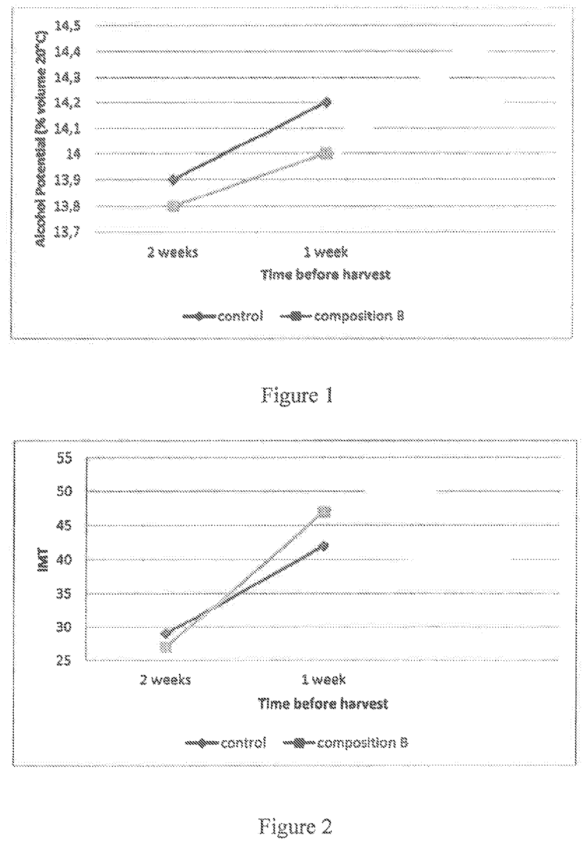

In an embodiment, the step of harvesting the grapes comprises harvesting the grapes prior to the anticipated harvest time and used for the production of red wine with lower alcohol content. In other words, the grapes may be harvested ahead of the harvest time of grapes for the production of fermented beverages with low alcohol content. As a non-limiting example, grapes harvested a week ahead of the harvest time of grapes show a lower alcohol potential (Figure 1).

In one embodiment of the invention, grapes from vines treated with the yeast composition may be harvested at least 1 day, at least 2 days, at least 3 days, at least 4 days, at least 5 days, at least 6 days, at least 7 days, at least 8 days, at least 9 days and at least 10 days ahead of the harvest time of grapes.

In one embodiment, the yeast composition may comprise at least one yeast from the genus *Saccharomyces* and/or non-*Saccharomyces.* The at least one yeast may be alone or in combination with one or more than one yeast from the genus *Saccharomyces* and/or non-*Saccharomyces.* In a further embodiment, several yeasts from the genus *Saccharomyces* may be used simultaneously.

In another embodiment, the non-*Saccharomyces* yeast may be selected from the group consisting of *Candida* sp, *Hanseniaspora* sp, *Hansenula* sp, *Kluyveromyces* sp, *Metschnikowia* sp, *Pichia* sp, *Starmerella* sp and *Torulaspora* sp.

In another embodiment, the yeast composition may comprise at least one yeast enriched in minerals, vitamins, nutrients or any other molecule of interest compared to standard yeasts used in the art.

In one embodiment, the yeast composition may comprise at least one live yeast, inactivated yeast, yeast extract, yeast autolysate, yeast cell wall, any other whole yeast derivative obtained by physico-chemical and/or enzymatic treatment, or any combination of the above. The physico-chemical treatment may comprise a temperature and/or pH treatment. In an embodiment, the yeast composition may be a blend of whole yeast derivative comprising a yeast extract and a whole yeast derivative obtained by physic-chemical treatment involving temperature and pH. The various processes and suitable conditions for preparing the different yeast compositions are known to the person skilled in the art.

In another embodiment, the yeast composition may be used alone or in combination with other components, such as but not limited to nutrients, fertilizers, pesticides, suitable excipients, adjuvants or combination thereof.

In one embodiment, the yeast composition may be in liquid form of various viscosities, cream form, solid or solid resuspended in liquid phase prior to treatment. The yeast composition may have a yeast and/or yeast derivative content greater than 0.05% (weight/weight), preferably between 0.15 and 0.5% (weight/weight).

In one embodiment, vines are treated with the yeast composition before harvesting grapes, preferably by foliar spraying, with at least one application. The rate of application may be greater than 0.1 kg/hectare, preferably between 0.25 and 4 kg/hectare, and more preferably 1 kg/hectare. Treatment may start at the beginning of veraison, preferably with at least 5-10% veraison, until whole veraison. Preferably, the treatment is performed in two successive applications, the second application performed between 1 and 20 days after the first application, preferably between 10 and 16 days after the first application, more preferably between 10 and 14 days. In another embodiment, vines may be treated with the yeast composition before the beginning of veraison. In an alternate embodiment, vines may be treated with the yeast composition after the veraison and before harvesting grapes.

In an alternate embodiment, the step of treating the vines before harvesting the grapes with the yeast composition may comprise treating the soil, roots, stems, leaves or grapes by pulverization, mechanical incorporation in the soil or any other suitable method for the purpose of the present invention. Rate of application and number of treatments is as defined above.

In one embodiment of the present invention, grapes from vines treated with the yeast composition exhibit an improved balance between the phenolic and pulp maturity when compared to untreated grapes. The grapes may be used for the production of must with improved organoleptic properties. The must may be used for the production of non-fermented beverages such as grape juice or fermented beverages such as red wine with improved organoleptic properties. Alcoholic fermentation of the must may occur spontaneously or be performed using any *Saccharomyces* or non-*Saccharomyces* yeast according to standard production methods known to a person having ordinary skill in the art. The production of fermented beverages may comprise a further step of inducing a malolactic fermentation in the red wine.

The present invention also relates to must, non-fermented or fermented beverages with organoleptic properties obtained by the processes described above.

### EXAMPLES

The yeast composition selected for the treatment of standing grapes was a whole yeast derivative obtained by physico-chemical treatment involving temperature and pH (composition B).

### Example 1

Trials were run in the vineyard Bodegas Vizar, Villabanez (Valladolid, Spain) with plots of 2500 vines/ha on Tempranillo variety. Treatment was performed with composition B. A homogeneous parcel of 2 hectares was split in 2 parcels consisting of 2500 vines (one control and one treatment). 1 kg of composition B (in powder) was dissolved in 10 L of water and further diluted to 350 L. This volume was added to the 2000 L tank of a spraying machine with 2 articulated arms and 8 outputs for each arm. The machine was carried by a tractor at minimum speed of 4.9 km/h and maximum speed of 5.1 km/h. Pressure of application was between 3.5-4 atm and 550 rev. Both applications were done at 10:00 am with perfect homogeneous conditions (favorable climatology and no wind). Two applications were performed. The second application was performed 12 days after the first one.

Sampling of grapes was performed once a week for the last three weeks before the theoretical date of harvest, with an average of 300 berries sampled on various identified lines in the vineyard at various exposition and height on the vines. Berries were weighted and further crushed and mixed in a standard vessel. Maceration was performed for 60 minutes at room temperature, followed by a decantation and quick centrifugation (15 min at 5000 rpm). Then the analysis on the must included the sugar content by refractometry or near infra-red spectroscopy, total acidity by titrimetry, pH by polarography, procyanidins polymerization by Dmach index and the index of maturity of tannins (IMT).

Red wines were produced according to standard protocols in the art and further aged in bottled for one year. Chemical analyses were performed following alcoholic and malolactic fermentation Finally, the organoleptic properties of the wines after aging in bottles were evaluated by blind tasting.

Figure 1 illustrates the development of the alcohol potential for grapes from treated and untreated vines. Grapes from treated vines exhibit a lower alcohol potential one week prior to the anticipated harvest time (14 % volume compared to 14.2 % volume for untreated grapes).

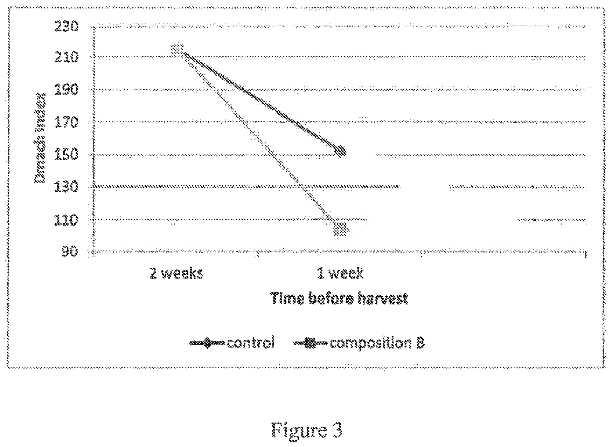

Figure 2 demonstrates that foliar application of a yeast composition on standing grapes results in a higher maturity of tannins (IMT) of sampled grapes up to one week before harvest. Figure 3 illustrates that the highest degree of polymerization of procyanidins (or tannins) is reached at least one week in advance as demonstrated by a Dmach index value 106 one week before harvest. This represents a significant improvement compared to the untreated sampled grapes with a Dmach index = 150 at the same time, considering that the treated sampled grapes have a higher level of the Index of Maturity Tannins (IMT)

Taken in combination with Figures 1 to 3, these results indicate that grapes harvested about 1 week before the anticipated harvest time had a lower alcohol potential and a higher maturity (as demonstrated by the IMT and Dmach index) than grapes from untreated vines. The treated grapes harvested about 1 week before the anticipated harvest time could also be used for the production of wines with a reduced alcohol content compared to wines produced with grapes from untreated vines.

Chemical analysis on the wines following alcoholic fermentation demonstrated a higher acidity, lower pH and better phenolic maturity as represented by a lower Dmach index compared to control. Table 1 demonstrates that wines produced with grapes treated with composition B had a higher acidity, a lower pH and a lower Dmach index than the untreated control.

**Table 1: Chemical analysis of wines after alcoholic fermentation**

| Chemical parameter | Control | Composition B |
|---|---|---|
| Total Acidity (g tartaric acid/L) | 6,1 | 6,5 |
| pH | 3,64 | 3,53 |
| Dmach Index | 184 | 164 |

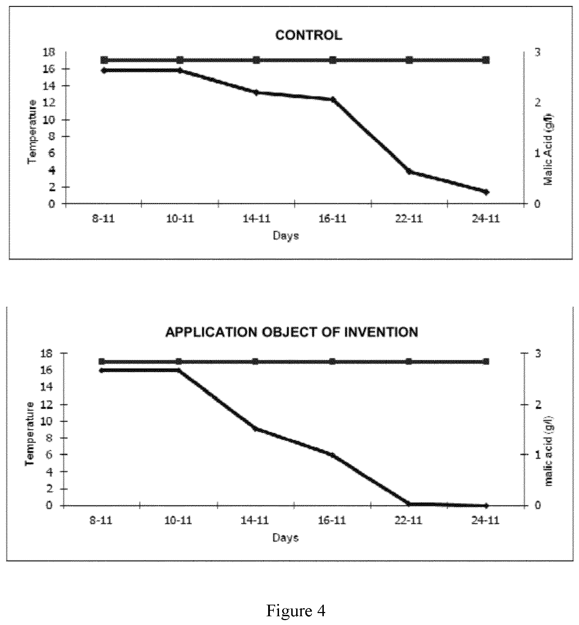

As shown in Figure 4, the malolactic fermentation was faster with grapes from vines treated with composition B, illustrated by a complete consumption of malic acid two days before the control. Table 2 also demonstrates that wines produced with grapes from treated vines exhibit a higher acidity, lower pH and lower Dmach index than control after malolactic fermentation. All of these factors are indicative of a better balance between the phenolic and pulp maturity observed both after the alcoholic and malolactic fermentation when compared to the untreated control.

**Table 2: Chemical analysis of wines after malolactic fermentation**

| Chemical parameter | Control | Composition B |
|---|---|---|
| Total Acidity (g tartaric acid/L) | 4,5 | 4,7 |
| pH | 3,9 | 3,7 |
| Dmach Index | 184 | 164 |

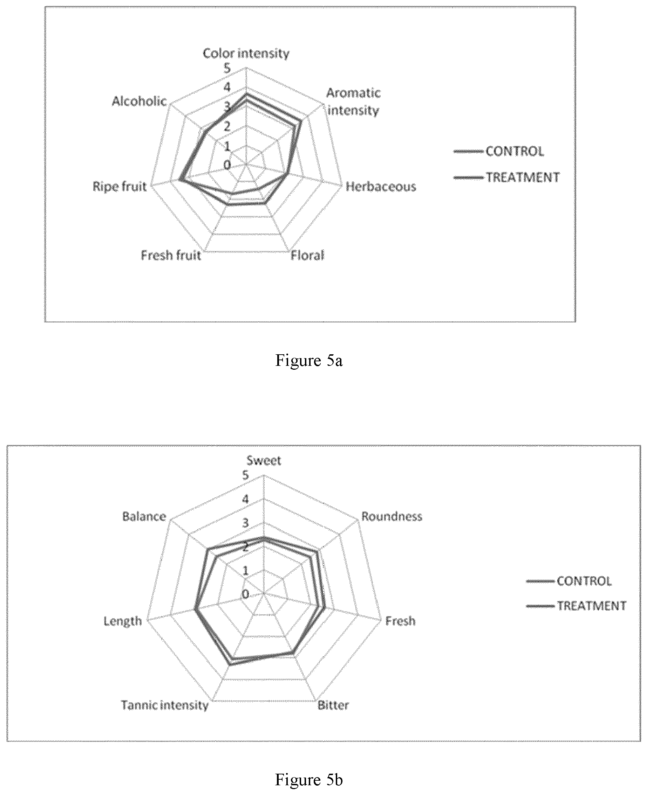

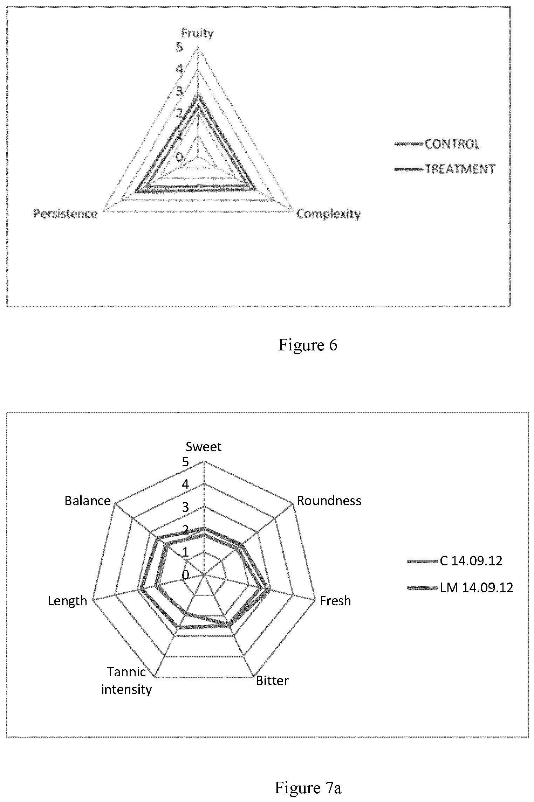

Aromatic, gustative and aftertaste markers were blind-tasted by a panel of 20 expert tasters. As shown in Figure 5a, the Tempranillo vines produced with grapes treated with composition B showed more aromatic and color intensity, were fruitier and more floral than the untreated control. They also showed more roundness, balance, freshness and tannic intensity (as shown in Fig. 5b) than the untreated control. In aftertaste, the Tempranillo produced with grapes treated with composition B showed more complexity, fruitiness and was more persistent in mouth than the untreated control (see Fig. 6). A majority of the expert tasters had a net preference for the Tempranillo produced with grapes treated with composition B. All of these are indicative of grapes with a balanced phenol and sugar maturity.

### Example 2

Treatments with composition B were performed in Valpolicella (Italy) on the Rondinella variety. Treatment was started at the onset of veraison, between 5 and 10% veraison. Treatment was performed at a rate of 1 kg/ha. Two treatments were performed and the interval between treatments was 14 days. Samplings of grapes were done once a week after the second treatment to monitor their maturity. Grapes from the control (no treatment) and treated grapes were harvested at three different times. The harvesting times were (a) 24 days after the second treatment, (b) 31 days after the second treatment and (c) 38 days after the second treatment. Alcoholic and malolactic fermentations were performed in separate tanks according to methods known to a person having ordinary skill in the art. As shown in Figures 7a, b and c, 8a, b and c, and 9a, b and c, aromatic, gustative and olfactory markers were blind-tasted on wines made with untreated and treated grapes harvested at three different times by a panel of 20 expert tasters.

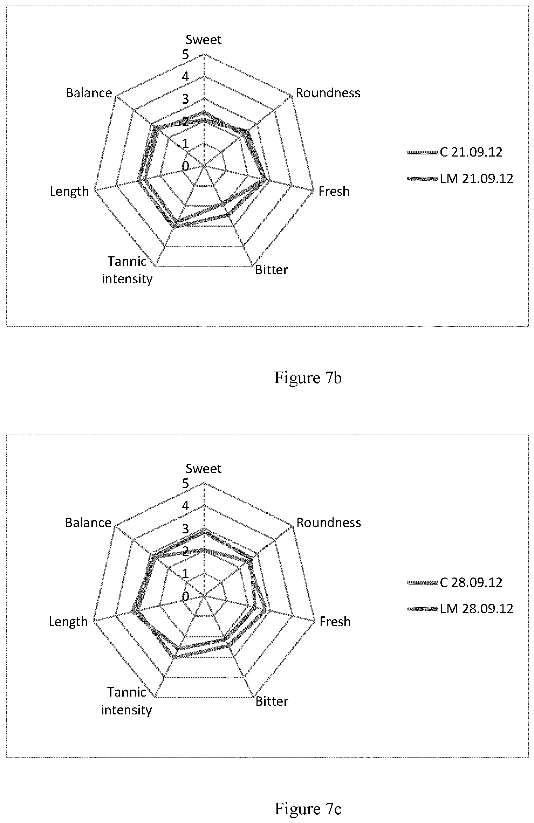

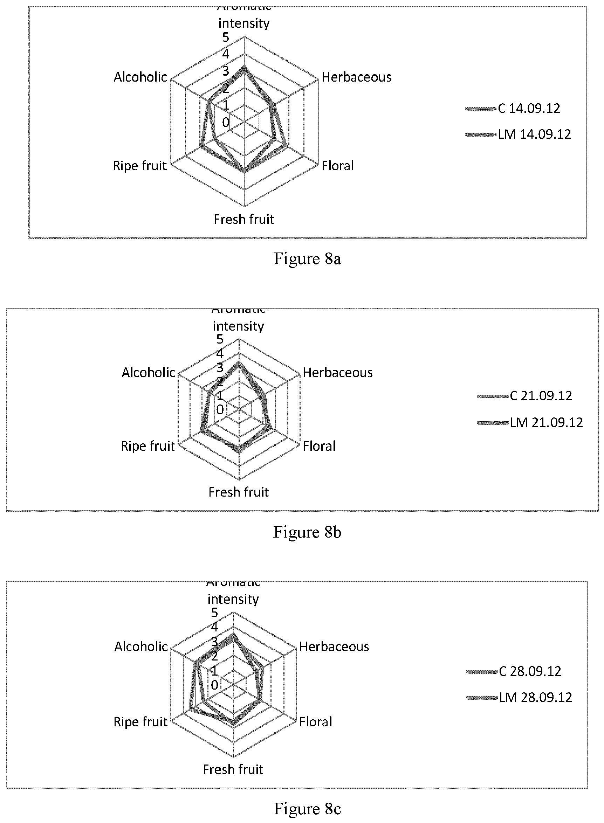

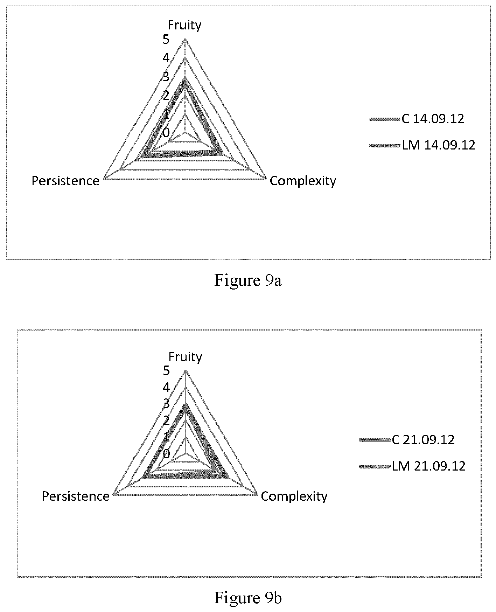

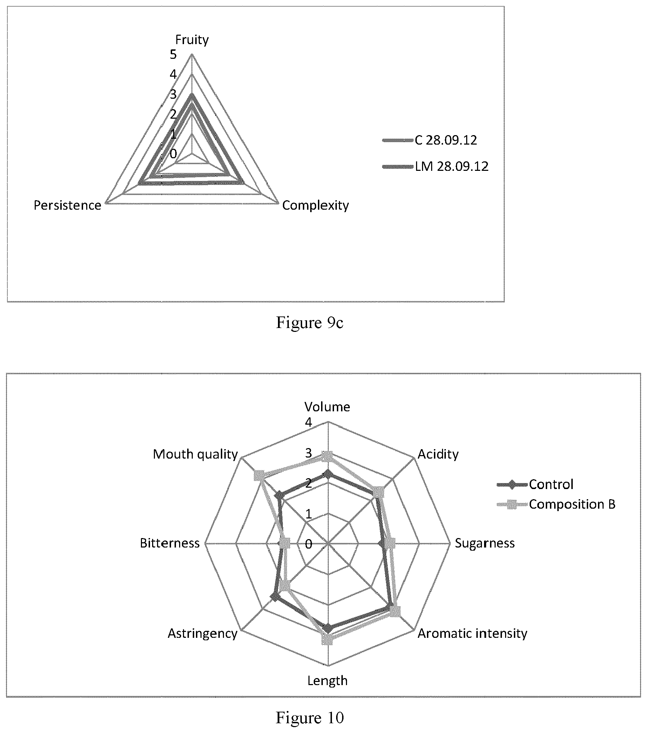

As shown in Figure 7a, Rondinella wines produced with grapes treated with composition B and harvested 24 days after the second treatment had a higher roundness, sweetness, balance, length, tannic intensity and freshness than the wines produced with the untreated grapes (control). In Figure 7b (31 days after the second treatment), wines produced with grapes treated with composition B had a higher roundness, balance, length and tannic intensity than the wines produced with the untreated grapes (control). In Figure 7c (38 days after second treatment) wines produced with grapes treated with composition had a higher roundness, sweetness and length in mouth than the wines produced with the untreated control. Figures 7a, 7b and 7c show the impact of the treatment with composition B on the evolution of the grape maturity and the wine quality in the gustatory phase. Figures 8a, 8b and 8c show the olfactory tasting phase of the wines produced with grapes treated with composition B at three different times. All wines made with grapes treated with composition B and harvested at different times had a higher fruit ripeness. Figures 9a, 9b and 9c show that wines produced with grapes treated with composition B were fruitier and showed more complexity and persistence in the aftertaste phase. All of these indicate that treatment improves the balance of phenol and sugar maturity of the grapes and improve the wine quality.

### Example 3

Trials were run in France and Spain as shown in Table 3.

**Table 3: Locations and wine varieties tested in France and Spain**

| Location | Variety | Alternatives | Characteristics |
|---|---|---|---|
| Languedoc-Roussillon, France | Merlot | Control | 2.5 ha |
| | | Composition B | |
| Languedoc-Roussillon, France | Syrah | Control | 0.24 ha |
| | | Composition B | |
| | Cabernet Sauvignon | Control | 4 ha |
| Retuerta del Bullaque, Ciudad Real, Spain | | Composition B | |

Treatments with Composition B were performed on Merlot, Syrah and Cabernet Sauvignon varieties in three different locations, two in Languedoc-Roussillon, France and one in Retuerta del Bullaque, Ciudad Real, Spain. Treatment was started at the onset of veraison, between 5 and 10% veraison. Treatment was performed at a rate of 1 kg/ ha. Two treatments were performed and the interval between treatments was 12 days. Alcoholic and malolactic fermentations were performed in separate tanks according to methods known to a person having ordinary skill in the art. Gustative markers for the Merlot were blind-tested by a panel of 25 oenology students. Gustative markers for the Syrah were blind-tested by the technical group of sensory analysis at INRA Montpellier. And finally, gustative and aftertaste markers for the Cabernet Sauvignon were blind-tested by a panel of 20 expert tasters.

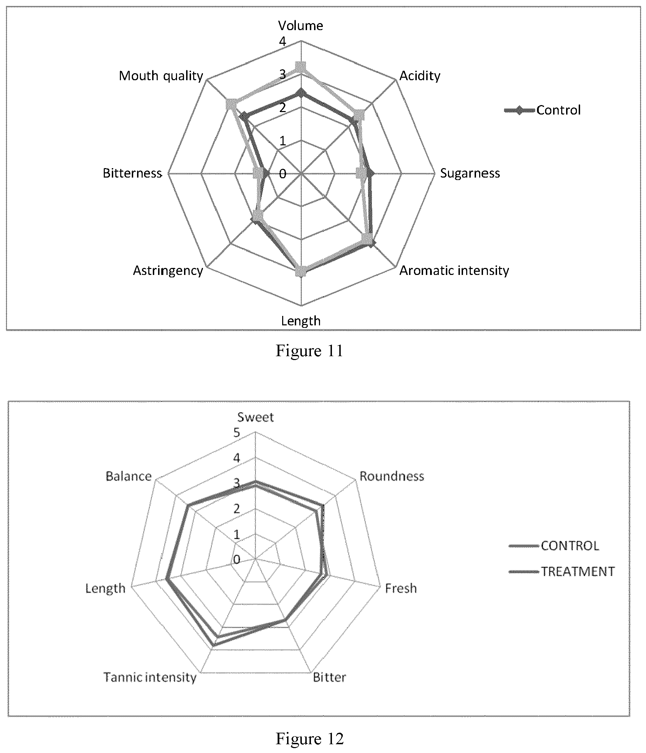

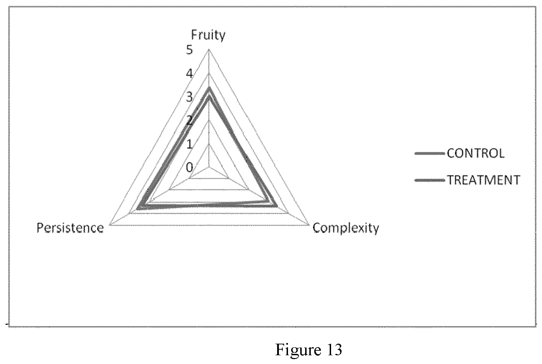

As shown in Figure 10, the Merlot produced with grapes treated with composition B exhibited a higher volume, better quality in the mouth and a lower astringency than untreated control. The blind test revealed that 14 out of the 25 oenology students had a preference for the Merlot produced with grapes treated with composition B. All of these are indicative of grapes with a balanced phenol and sugar maturity. As shown in Figure 11, the Syrah produced with grapes from vines treated with composition B exhibited a higher volume and a better mouth feel than the untreated control. The Cabernet Sauvignon produced with grapes treated with composition B was sweeter, showed more roundness and tannic intensity (gustative descriptors as shown in Fig. 12) than the untreated control. In aftertaste, the Cabernet Sauvignon produced with grapes treated with composition B showed more complexity than the untreated control which was fruitier (see Fig. 13). A majority of expert tasters had a preference for the Cabernet Sauvignon produced with grapes treated with composition B. The alcohol content of the Cabernet Sauvignon produced with grapes treated with composition B and the untreated control was analyzed at the Oenology Department of Universidad Rovira e Virgili in Spain. The Cabernet Sauvignon produced with grapes treated with composition B had an alcohol content of about 0.8% w/w lower than the untreated control. All of these are indicative of grapes with a balanced phenol and sugar maturity.

While the invention has been described in connection with specific embodiments thereof, it will be understood that it is capable of further modifications and this application is intended to cover any variations, uses, or adaptations of the invention following, in general, the principles of the invention and including such departures from the present disclosure that come within known or customary practice within the art to which the invention pertains and as may be applied to the essential features hereinbefore set forth, and as follows in the scope of the appended claims.

## Claims

1. A process for improving organoleptic properties of must, non-fermented or fermented beverages comprising the steps of:
treating vines before harvesting grapes with a yeast composition to balance sugar and phenolic maturation in the grapes;
harvesting the grapes; and
processing the grapes to produce must, non-fermented or fermented beverages.

2. The process according to claim 1 wherein the step of harvesting the grapes comprises harvesting the grapes ahead of a harvest time of grapes for the production of fermented beverages with low alcohol content compared to fermented beverages produced with grapes harvested at the harvest time.

3. The process according to 1 or 2, wherein the yeast composition comprises active yeasts, inactivated yeasts, yeast extracts, yeast autolysates, yeast cell walls, yeast derivatives or combinations thereof.

4. The process according to claim 3 wherein the yeast is a *Saccharomyces* or a non-*Saccharomyces* yeast.

5. The process according to claim 4 wherein the non-*Saccharomyces* yeast is selected from the group consisting of *Candida* sp, *Hanseniaspora* sp, *Hansenula* sp, *Kluyveromyces* sp, *Metschnikowia* sp, *Pichia* sp, *Starmerella* sp and *Torulaspora* sp.

6. The process according to any one of claims 3 to 5 wherein the yeast composition further comprises minerals, vitamins or nutrients.

7. The process according to any one of claims 3 to 6 wherein the yeast composition is in the form of a liquid of various viscosities, cream form, solid or solid resuspended in liquid phase prior to treatment.

8. The process according to any one of claims 3 to 7 wherein a yeast content in the yeast composition is greater than 0.05% weight/weight, preferably between 0.15 and 0.5% weight/weight.

9. The process according to any one of claims 3 to 8 wherein the yeast composition further comprises nutrients, fertilizers, pesticides, suitable excipients, adjuvants or combination thereof.

10. The process according to any one of claims 1 to 9 wherein the step of treating the vines comprises treating the vines by foliar application.

11. The process according to any one of claims 1 to 9 wherein the step of treating the vines comprises treating the grapes of the vines with the yeast composition by pulverization or any other possible method thereof.

12. The process according to any one of claims 1 to 9 wherein the step of treating the vines comprises treating soil, roots or stems of the vines with the yeast composition by pulverization, mechanical incorporation or any other possible method thereof.

13. The process according to claim 10 wherein the step of treating the vines with the foliar-applied yeast composition comprises treating the vines from the beginning of veraison until the end of veraison, preferably when at least 5-10% veraison has begun, at a rate of application of at least 0.1 kg/hectare, preferably between 0.25 and 4 kg/hectare, and more preferably 1 kg/hectare.

14. The process according to any one of claims 10 to 13 wherein the step of treating the vines comprises at least one treatment, and more preferably two treatments, the second being performed between 1 and 20 days after the first treatment, preferably between 10 and 14 days.

15. The process according to any one of claims 10 to 12 wherein the step of treating the vines comprises treating the vines before the beginning of veraison.

16. The process according to any one of claims 10 to 12 wherein the step of treating the vines comprises treating the vines after veraison.

17. The process according to any one of claims 1 to 16, wherein the step of processing the grapes further comprises submitting the must to alcoholic fermentation with the *Saccharomyces* or the non-*Saccharomyces* yeast to produce a red wine.

18. A fermented or non-fermented beverage obtained by the process of any one of claims 1 to 18.
